# EUROPÄISCHE PATENTANMELDUNG

(11) **EP 1 319 691 A1**
(43) Veröffentlichungstag der Anmeldung: **18.06.2003**
(21) Anmeldenummer: 02022498.6
(22) Anmeldetag: 05.10.2002
(51) Int. Cl.: C08L 101/00, C08K 5/00

(54) **Verfahren und Mittel zur Verringerung der Formaldehydemission bei der Verarbeitung von Thermoplasten mit Beimengungen von Polyacetal**

(30) Priorität: 12.12.2001 DE 10160866
(71) Anmelder: Ticona GmbH, 65451 Kelsterbach (DE)
(72) Erfinder: Wulf, Stefan, Dr., 41066 Mönchengladbach (DE); Schiebisch, Jens, Dr., 63579 Freigericht (DE); Knapp, Roger, 65597 Hünfelden (DE)

(57) **Zusammenfassung**

Die vorliegende Erfindung betrifft eine Verfahren zur Verringerung der Formaldehydemission von mit Polyacetal gemischten Thermoplasten, dadurch gekennzeichnet, dass die Thermoplastmischung in Gegenwart mindestens eines Stabilisators in einem Mischaggregat aufgeschmolzen und weiteren Verarbeitungsschritten unterworfen wird.

Bei diesem Verfahren ist die von der Zersetzung des Polyacetals herrührende Formaldehydemission durch die Zugabe von geeigeneten Additiven /Stabilisatoren stark reduziert.

## Beschreibung

Das hochwertige Recycling von Kunststoffbauteilen setzt eine möglichst sortenreine Erfassung der Altteile oder Produktionsrückstände, d.h. ohne Anteile an Fremdkunststoffen, voraus. Eine derartige Sortierung und/oder Trennung sind jedoch oft nur schwer möglich, so dass oftmals eine Vermischung nicht vermieden werden kann. Gewisse Anteile an Fremdkunststoffen können z. B. zu einer Verschlechterung der Eigenschaften des Basiskunststoffs führen oder aufgrund von Zersetzungsreaktionen eine Verarbeitung in der Schmelze verhindern.

Oftmals findet sich Polyacetal als Verunreinigung in den Kunststoffen. Die Zersetzungsreaktionen können dadurch beherrscht werden, dass die Verarbeitungsbedingungen wie Temperatur, Verweilzeit auf den Basiskunststoff abgestimmt werden, nicht jedoch für das als Verunreinigung enthaltende Polyacetal. Weiterhin sind Reaktionen des Basiskunststoffs, der saure Endgruppen, Additive, Katalysatorreste enthalten kann, mit dem Polyacetal zu erwarten.

Besonders beim Recycling können Thermoplaste unerwünschte Beimengungen aus Polyacetal enthalten. Die Verunreinigungen aus Polyacetal gelangen in der Regel dadurch in die zu verwertenden Kunststoffe, dass Bauteile aus Polyacetal von den eigentlich zu verwertenden Kunststoffbauteilen nicht abgetrennt werden oder nicht abgetrennt werden können. Auch können durch unsachgemäße Aufbereitung mit ungenügender Reinigung der Apparate aus vorhergehenden Produktionen, die Polyacetal enthielten, Verunreinigungen aus Polyacetal in andere Kunststoffe gelangen.

Bei der Schmelzeverarbeitung von Thermoplasten, die geringe Beimengungen aus Polyacetal enthalten, kann sich Formaldehyd bilden. Das Polyacetal depolymerisiert bzw. zersetzt sich in der Schmelze. Bereits geringe Mengen, wie z.B. weniger als 0,5 Gew.% an Polyacetal im Basiskunststoff können ausreichen, um störende Formaldehydkonzentrationen freizusetzen.

Es ist allgemein bekannt, dass Polyacetale sich bei der Verarbeitung in der Schmelze thermisch zersetzen können und dabei Formaldehyd freisetzen.

Hohe Verarbeitungstemperaturen über 230°C und lange Verweilzeiten beschleunigen den Abbau (Becker/Braun, Kunststoff-Handbuch, Band 3/1, Polycarbonate, Polyacetale, Polyester, Celluloseester, Carl Hanser Verlag München Wien 1992). Weiterhin können Polyacetale mit sauren Verbindungen, Additiven, Katalysatorresten etc. unter Formaldehydfreisetzung reagieren.

Es ist aus der Schrift ATI 0305 der Bayer AG "Recycling und Design" bekannt, dass Polyacetal als Beimengung im Recyclingprozess vermieden werden sollte, da es zu ungenügenden Eigenschaften des Basiskunststoffs führt. Die Bildung von Formaldehyd aus Beimengungen von Polyacetal in anderen Kunststoffen wird am Beispiel des Recyclings von Polyester beschrieben.

Das werkstoffliche und rohstoffliche Recycling von reinem Polyacetal wird von Fleischer et al. in Kunststoffe 9/92 dargestellt.

Es bestand daher die Aufgabe, die Formaldehyd-Freisetzung bei der Verarbeitung von mit Polyacetal vermischten Thermoplasten in der Schmelze zu verringern.

Diese Aufgabe wird gelöst durch ein Verfahren zur Verringerung der Formaldehydemission von mit Polyacetal gemischten Thermoplasten, dadurch gekennzeichnet, dass die Thermoplastmischung in Gegenwart mindestens eines Stabilisators, also einer chemischen Verbindung mit stabilisierender Wirkung, in einem Mischaggregat aufgeschmolzen und weiteren Verarbeitungsschritten unterworfen wird.

Es wurde überraschend gefunden, dass durch dieses Verfahren die Formaldehydemission drastisch reduziert werden kann.

Dies ist um so überraschender, da bei der Verarbeitung anderer Thermoplaste als Polyacetal, insbesondere jedoch bei deren Recycling, meist Verarbeitungsbedingungen der Schmelze gewählt werden, die deutlich ungünstiger sind als für die Verarbeitung von reinem Polyacetal gewählt werden.

Dies ist weiter überraschend, da bekannt ist, dass Polyacetal sich bereits bei Vorhandensein kleiner Mengen an ungeeigneten Fremdstoffen zersetzen kann.

Die vorliegende Erfindung betrifft daher ein Verfahren zur Verringerung der Formaldehydemission von Thermoplastmischungen.

Die Erfindung betrifft außerdem die Verwendung von Stabilisatoren in dem erfindungsgemäßen Verfahren, also zur Verringerung der Formaldehydemission in Thermoplastmischungen.

Das erfindungsgemäße Verfahren ist prinzipiell geeignet zur Verarbeitung aller Thermoplastmischungen, die mindestens einen von Polyacetal verschiedenen thermoplastischen Kunststoff enthalten, der mit Polyacetal verunreinigt ist.

Thermoplastische Kunststoffe sind beispielsweise beschrieben in Saechtling, Kunststoff-Taschenbuch, Hanser Verlag, 1998, 27. Ausgabe auf den Seiten 375 bis 534, worauf Bezug genommen wird.

Der Begriff thermoplastische Polymere im Sinne der Erfindung schließt grundsätzlich alle bekannten, synthetischen, natürlichen und modifizierten natürlichen Polymere ein, die sich in der Schmelze verarbeiten lassen, jedoch mit Ausnahme von Polyacetal.

Beispielhaft seien genannt:
Polylactone, wie Poly(pivalolacton) und Poly(caprolacton);
Polyurethane, wie die Polymerisationsprodukte der Diisocyanate, wie zum Beispiel 1,5-Naphthalin-diisocyanat; p-Phenylen-diisocyanat, m-Phenylendiisocyanat, 2,4Toluyl-diisocyanat, 2,6-Toluylen-diisocyanat, 4,4'-Diphenylmethandiisocyanat, 3,3'-Dimethyl-4,4'-biphenyl-diisocyanat, 4,4'-Diphenylisopropylidendiisocyanat, 3,3'-Dimethyl-4,4'-diphenylmethandiisocyanat, 3,3'-Dimethoxy-4,4'-biphenyl-diisocyanat, Dianisidin-diisocyanat, Toluidin-diisocyanat, Hexamethylen-diisocyanat, 4,4'-Diisocyanatodiphenylmethan, 1,6-Hexamethylen-diisocyanat, und 4,4'-Dicyclohexylmethan-diisocyanat, mit Polyestern abgeleitet von Dicarbonsäuren und langkettigen Diolen, wie Poly(tetramethylenadipat), Poly(ethylenadipat), Poly(1,4-butylenadipat), Poly(ethylensuccinat), und Poly(2,3-butylensuccinat), und/oder mit Polyetherdiolen abgeleitet von einem oder mehreren Diolen, wie Ethylenglykol, Propylenglykol, also Polydiolen, wie Diethylen-glykol, Triethylenglykol und/oder Tetraethylenglykol
Polycarbonate, wie Poly[methan bis(4-phenyl)-carbonat], Polydimethylmethan bis(4- phenyl)-carbonat], Poly[diphenylmethan bis(4-phenyl)-carbonat], und Polycyclohexan-1,1 bis(4-phenyl) carbonat];
   Polysulfone, wie das Reaktionsprodukt des Natriumsalzes des 2,2-Bis(4-hydroxyphenyl)-propans oder des 4,4'-Dihydroxydiphenylethers mit 4,4'-Dichlorodiphenylsulfon;
Polyether, Polyketone und Polyetherketone, wie Polymerisationsprodukte des Hydrochinons, des 4,4'-Dihydroxybiphenyls, des 4,4'-Dihydroxybenzophenons oder des 4,4'-Dihydroxydiphenylsulfons mit dihalogenierten, insbesondere difluorierten oder dichlorierten, aromatischen Verbindungen vom Typ 4,4'-Di-halo-diphenylsulfon, 4,4'-Di-halo-dibenzophenon, Bis-4,4'-dihalobenzoyl-benzol, und 4,4'-Di-halo-biphenyl;
Polyamide, wie Poly(4-amino-butanoat), Poly(hexamethylen-adipamid), Poly(6-aminohexanoat), Poly(m-xylylen-adipamid), Poly(p-xylylen-sebacamid), Poly(2,2,2-trimethylhexamethylen-terephthalamid), Poly(metaphenylen-isophthalamid) (NOMEX), und Poly(p-phenylen-terephthalamid) (KEVLAR);
Polyester, wie Poly(ethylen-acetat), Poly(ethylen-1,5-naphthalat), Poly(1,4-Cyclohexandimethylen-terephthalat), Poly(ethylen-oxybenzoat) (A-TELL), Poly(parahydroxy-benzoat) (EKONOL), Poly(1,4-cyclohexyliden-dimethylenterephthalat) (KODEL), (cis) Poly(1,4-cyclohexyliden-dimethylen-terephthalat) (Kodel), Polyethylenterephthalat, und Polybutylenterephthalat;
Poly(arylenoxide), wie Poly(2,6-dimethyl-1,4-phenylenoxid) und Poly(2,6-diphenyl-1,4-phenylen oxid);
Flüssigkristalline Polymere, wie die Polykondensationsprodukte aus der Gruppe Monomeren, die besteht aus Terephthalsäure, Isophthalsäure, 1,4-Naphthalindicarbonsäure, 2,6-Napthalindicarbonsäure, 4,4'-Biphenyldicarbonsäure, 4-Hydroxybenzoesäure, 6-Hydroxy-2-naphthalindicarbonsäure, Hydrochinon, 4,4 Dihydroxybiphenyl, und 4-Aminophenol;
Poly(arylensulfide), wie Poly(phenylensulfid), Poly(phenylen-sulfid-keton), und Poly(phenylen-sulfid-sulfon);
Polyetherimide;
Vinyl Polymere und ihre Copolymere, wie Polyvinylacetat, Polyvinylchlorid; Polyvinylbutyral, Polyvinylidenchlorid, und Ethylenvinylacetat Copolymere;
Polyacrylderivate, wie Polyacrylat und seine Copolymere, z.B. Polyethylacrylat, Poly(n-butylacrylat), Polymethylmethacrylat, Polyethylmethacrylat, Poly(n-butyl-methacrylat), Poly(n-propylmethacrylat), Polyacrylnitril, wasserunlösliche Ethylen-Acrylsäure Copolymere, wasserunlösliche Ethylen-Vinylalkohol Copolymere, Acrylnitril-Copolymere, Methylmethacrylat-Styrol Copolymere, Ethylen-Ethylacrylat Copolymere, und Acryl-Butadien-Styrol Copolymere;
Polyolefine, wie Poly(ethylen), z.B. Low Densitiy Poly(ethylen) (LDPE); Linear Low Density Poly(ethylen) (LLDPE) oder High Densitiy Poly(ethylen) (HDPE); Poly(propylen), chloriertes Poly(ethylen), z.B. chloriertes Low Density Poly(ethylen); Poly(4-methyl-1-penten), und Poly(styrol);
Wasserunlösliche lonomere;
Poly(epichlorhydrin);
Furan Polymere, wie Poly(furan);
Zelluloseester, wie Zelluloseacetat, Zelluloseacetat-butyrat, und Zellulosepropionat;
Silicone, wie Poly(dimethyl-siloxan), und Poly(dimethyl-siloxan-co-phenylmethyl-siloxan);
Protein Thermoplasten;
Thermoplastische Elastomere, die sich beispielsweise von einem oder mehreren der folgenden Polymere ableiten:
Polyurethan-Elastomere, Fluorelastomere, Polyesterelastomere, Polyvinylchlorid, thermoplastische Butadien/Acrylnitril Elastomere, thermoplastisches Poly(butadien), thermoplastisches Poly(isobutylen), Ethylenpropylen-Copolymere, thermoplastische Ethylen-propylen-dien Terpolymere, thermoplastische sulfonierte Ethyien-Propylen-Dien Terpolymere, Poly(chloropren), thermoplastisches Poly(2,3-dimethylbutadien), thermoplastisches Poly(butadien-pentadien), chlorsulfoniertes Poly-(ethylen), Blockcopolymere, aufgebaut aus Segmenten amorpher oder (teil)kristalliner Blöcke, wie Poly(styrol), Poly(vinyltoluol), Poly(t-butylstyrol), und Polyester, und elastomerer Blöcke wie Poly(butadien), Poly(isopren), Ethylen-Propylen Copolymere, Ethylen-Butylen-Copolymere, Ethylen-lsopren-Copolymere und deren hydrierte Abkömmlinge, wie zum Beispiel SEBS, SEPS, SEEPS, und auch hydrierte Ethylen-lsopren-Copolymere mit erhöhtem Anteil an 1,2-verknüpftem Isopren, Polyether, Styrol-Polymere, wie ASA (Arylnitril-Styrol-Acrylester), ABS (Acrylnitril-Butadien-Styrol) oder PC/ABS (Polycarbonat / ABS) und ähnliche, wie zum Beispiel die von Kraton Polymers unter dem Handelsnamen KRATONO vertriebenen Produkte, sowie alle Mischungen und Legierungen (mischbare und unmischbare Blends) von zwei oder mehreren der genannten Polymere.

Vorteilhaft einsetzbar ist das erfindungsgemäße Verfahren bei Polycarbonat (PC), bei Polyestern, wie Polybutylenterephthalat oder Polyethylenterephthalat, bei Acrylnitril-Styrol-Acrylester-Copolymeren (ASA), bei Polypropylen und dessen Compounds, sowie bei Polyamiden sowie Mischungen aus zwei oder mehreren dieser Polymere.

Das als Verunreinigung oder als Beimengung auftretende Polyacetal kann ein Polyacetal Homo- oder Copolymer sein oder Mischungen daraus. Polyacetale werden auch als Polyoxymethylene bezeichnet.

Diese Materialien sind beschrieben in Saechtling, Kunststoff-Taschenbuch, Hanser Verlag, 1998, 27. Ausgabe auf den Seiten 462 bis 464, worauf Bezug genommen wird.

Derartige Polymere sind dem Fachmann bekannt und in der Literatur beschrieben. Die Homopolymere werden im allgemeinen durch Polymerisation von Formaldehyd oder Trioxan hergestellt, wobei die Polymerisation kationisch oder anionisch initiiert werden kann. Polyoxymethylencopolymere enthalten neben Oxymethyleneinheiten noch Oxyalkyleneinheiten, wobei die Alkylengruppen 2 -8 Kohlenstoffeinheiten, linear oder verzweigt, enthalten können.

Bei den Polyoxymethylenen (POM), wie sie beispielsweise in der DE-A-2,947,490 beschrieben sind, handelt es sich im allgemeinen um unverzweigte lineare Polymere, die in der Regel mindestens 80 %, vorzugsweise mindestens 90 %, Oxymethyleneinheiten (-CH₂O-) enthalten.

Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z. B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen. Derartige Polyoxymethylenhomo- oder Copolymerisate sind dem Fachmann an sich bekannt und in der Literatur beschrieben. Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren. Besonders geeignete Katalysatoren sind beispielsweise Bortrifluorid und Trifluormethansulfonsäure.

Im Rahmen der Erfindung werden Polyoxymethylencopolymere bevorzugt, insbesondere solche, die neben den wiederkehrenden Einheiten -CH₂O- noch bis zu 50, vorzugsweise von 0,1 bis 20, und insbesondere 0,5 bis 10 mol% an wiederkehrenden Einheiten der nachstehenden Formel enthalten, 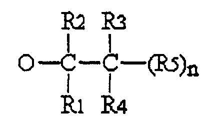 wobei R¹ bis R⁴ unabhängig voneinander ein Wasserstoffatom, eine C₁ bis C₄-Allkylgruppe oder eine halogensubstituierte Alkylgruppe mit 1 bis 4 C-Atomen und R⁵ eine -CH₂-, -O-CH₂-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat.

Vorteilhafterweise können diese Gruppen durch Ringöffnung von cyclischen Ethem in die Copolymere eingeführt werden. Bevorzugte cyclische Ether sind solche der Formel 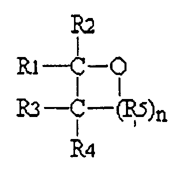 wobei R¹ bis R⁵ und n die obengenannte Bedeutung haben.

Als Beispiele seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale, wie Polydioxolan oder Polydioxepan, als Comonomere genannt.

Ebenfalls verwendet werden Oxymethylenterpolymerisate, die beispielsweise durch Umsetzung von Trioxan, einem der vor stehend beschriebenen cyclischen Ether und mit einem dritten Monomeren, vorzugsweise einer bifunktionellen Verbindung der Formel 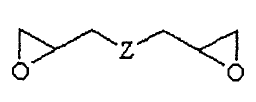 wobei Z eine chemische Bindung, -O- oder -ORO- (R= C₁- bis C8-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1, sowie Diether aus 2 mol Glycidylverbindung und 1 mol eines aliphatischen Diols mit 2 bis 8 C-Atomen, wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Polyoxymethylenhomo- und Copolymerisate sind dem Fachmann bekannt und in der Literatur beschrieben.

Die erfindungsgemäßen Zusammensetzungen weisen üblicherweise nur geringe Mengen an Polyacetalen auf, beispielsweise 0,1 bis 5,0 Gew.%, vorzugsweise 0,2 bis 1,0 Gew.%, bezogen auf die Zusammensetzung.

Die vorliegende Erfindung ist gekennzeichnet durch die Gegenwart mindestens eines Stabilisators. Durch die Gegenwart dieses Stabilisators wird die Emission an Formaldehyd reduziert.

Unter einem Stabilisator ist im Rahmen dieser Beschreibung jede Verbindung zu verstehen, die bewirkt, dass aus der geschmolzenen thermoplastischen Masse weniger Formaldehyd entweicht als ohne ihre Anwesenheit.

Besonders geeignet als Stabilisatoren sind stickstoffhaltige Stabilisatoren sowie Salze von Carbonsäuren.

Zur Verwendung als Stabilisator sind als Salze von Carbonsäuren, bevorzugt Carbonsäuresalze zweiwertiger Metallionen geeignet, besonders bevorzugt Carbonsäuresalze von Erdalkalimetallen.

Das Metallsalz der Carbonsäure kann ein Salz einer Carbonsäure mit einer oder mehrerer Carbonsäurefunktionen sein und ein oder mehrere Metallionen enthalten. Es können daher auch Mischsalze, also Salze mit mehr als einem Metallion, verwendet werden. Ebenso können auch Mischsalze verwendet werden, die aus mehreren verschiedenen Carbonsäuren stammen.

Beispiele für geeignete Carbonsäuren sind Bernsteinsäure, Zitronensäure, Essigsäure, Ameisensäure, Propionsäure, Buttersäure, Valeriansäure, Adipinsäure, Weinsäure, Stearinsäure, Palmitinsäure, und Montansäuren.

Bevorzugt als Metallionen sind Erdalkalimetallionen.

Beispiele für geeignete Metallionen sind Magnesium, Calcium, Strontium, Barium, Zink und Aluminium.

Vorteilhaft einsetzbar sind zum Beispiel Calciumcitrat und Tricalciumcitrat.

Weiter vorteilhaft sind Salze von Fettsäuren, insbesondere Salze von höheren Fettsäuren mit 10 - 32 Kohlenstoffatomen, bevorzugt 14-32 Kohlenstoffatomen.

Besonders bevorzugt sind Salze der Montansäuren und Stearinsäure.

Bevorzugte Metalle sind solche, die als ein- oder zweiwertige lonen vorkommen, z.B. Alkali- und Erdalkalimetalle, insbesondere Erdalkalimetalle.

Besonders bevorzugt sind Magnesium und Calcium.

Bevorzugter Stabilisator ist Calciumstearat; ganz besonders bevorzugt ist Magnesiumstearat.

Das Carbonsäuresalz wird erfindungsgemäß üblicherweise in einer Menge von 0,0001 Gew.% bis 5 Gew.%, bevorzugt 0,001 Gew.-% bis 1 Gew.-% eingesetzt.

Als Stabilisator einsetzbar sind außerdem stickstoffhaltige Stabilisatoren. Diese werden üblicherweise in Mengen von 0,001 Gew.-% bis 5 Gew.-%, bevorzugt 0,01 - 1,0 Gew.-%, besonders bevorzugt 0,03 - 0,5 Gew.-% eingesetzt.

Bevorzugt handelt es sich hierbei um heterozyklische Verbindungen, die mindestens ein Stickstoffatom in Ring enthalten.

Beispiele sind Pyrrolidin, Piperidin, Pyrrol, Pyridin, Purin, Indol, Carbazol, Tryptophan, Oxazol, Imidazol, Thiazol, Picolin, Lutidin, Collidin, Chinolin, Pyridazin, Pyrimidin, Pyrazin und ihre Derivate.

Vorteilhaft sind heterocyclische Verbindungen mit mindestens einem Stickstoffatom als Heteroatom, welches einem aminosubstituierten Kohlenstoffatom benachbart ist, wie zum Beispiel Aminopyridin und davon abgeleitete Verbindungen, oder Melamin.

Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine, sowie Pyrrolidon und davon abgeleitete Verbindungen und aus diesen Verbindungen hergestellte Mischungen.

Beispiele für geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate.

Besonders vorteilhaft sind weiter Triamino-1,3,5-triazin (Melamin) und seine Derivate, wie zum Beispiel Melamin-Formaldehydkondensate und Methylolmelamin.

Ganz besonders bevorzugt sind Melamin, Methylolmelamin, Melamin-Formaldehydkondensate und Allantoin.

Weiter einsetzbar sind als stickstoffhaltige Stabilisatoren Polyamide, insbesondere oligomere Polyamide.

Geeignete Polyamide sind insbesondere Polyamide, die Adipinsäurereste oder Isophorondiaminreste als Monomerbausteine enthalten, insbesondere Polyamide die aus beiden vorgenannten Monomerbausteinen aufgebaut sind.

Besonders bevorzugt sind diese Produkte mit Stearylsäureendgruppen versehen.

Die stickstoffhaltigen Stabilisatoren können einzeln oder in Kombination verwendet werden.

Ebenso einsetzbar sind Mischungen aus unterschiedlichen Stabilisatoren, beispielsweise Mischungen von stickstoffhaltigen Stabilisatoren mit Metallsalzen von Carbonsäuren.

Als Mischaggregat im erfindungsgemäßen Verfahren sind prinzipiell alle beheizbaren Mischaggregate geeignet. Geeignete Mischaggregate und -verfahren sind beispielsweise beschrieben in: Saechtling, Kunststoff-Taschenbuch, Hanser Verlag, 27. Auflage 1998, auf den Seiten 202 bis 217, worauf Bezug genommen wird.

Die Mischung des mit Polyacetal gemischten Thermoplasten kann beispielsweise in Knetern durchgeführt werden, wobei an dieser Stelle nur beispielhaft Brabender-Kneter angegeben seien.

In einer bevorzugten Ausführungsform des erfindungsgemäßen Verfahrens besteht das Mischaggregat aus mindestens einer Schneckenmaschine.

In einer besonders bevorzugten Ausführungsform werden als Schneckenmaschinen Extruder, insbesondere Zweischneckenextruder, verwendet.

Die Massetemperaturen liegen in den für die jeweils verwendeten Thermoplasten üblichen Bereichen, meist zwischen 100 und 500°C, vorteilhaft zwischen 150 und 350°C.

Die vorteilhaften Verarbeitungstemperaturen hängen wesentlich von dem verwendeten Thermoplasten ab.

Nur beispielhaft genannt seien an dieser Stelle als vorteilhafte Temperaturen für LDPE 160 bis 260°C, HDPE 260 bis 300°C, und Polypropylen 220 bis 270°C.

Als weitere Verarbeitungsschritte sind im Prinzip alle Verfahren zur thermoplastischen Kunststoffverarbeitung geeignet. Geeignete Verfahren sind in Saechtling, Kunststoff-Taschenbuch, Hanser Verlag, 27. Auflage 1998 auf den Seiten 201 bis 369 beschrieben, worauf Bezug genommen wird.

Vorteilhaft sind die Verarbeitung im Spritzguss, durch Spritzprägen, durch Extrusion oder Pressformen.

Die nachfolgenden Beispiele erläutern die Erfindung ohne diese zu begrenzen.

### Allgemeine Arbeitsvorschrift

In der Knetkammer eines Brabender Messkneters wurden etwa 50 g des Reaktionsgemisches bestehend aus getrocknetem und gemahlenem Blend, POM und gegebenenfalls Stabilisator eingefüllt und bei der Reaktionstemperatur von etwa 240°C aufgeschmolzen. Die Schmelze wurde 50 Minuten lang geknetet, wobei der aus der Schmelz frei werdende Formaldehyd mittels eines Stickstoffstromes ausgetragen und in einer Vorlage mit wässriger Natriumsulfitlösung aufgefangen und "online" gegen Schwefelsäure titrimetrisch bestimmt wurde. Die Zusammensetzung und die erhaltenen Ergebnisse sind in der folgenden Tabelle dargestellt.

**Tabelle**

| Beispiel Nr. | POM-Gehalt (Gew.%) | Thermoplast | Melamin-Zusatz (Gew.%) | Mg-Stearat-Zusatz (Gew.%) | NaOH-Zusatz (Gew.%) | Formaldehyd-Emission (ppm) |
|---|---|---|---|---|---|---|
| V1 | 0,25 | PC¹⁾ / ASA²⁾ | 0 | 0 | 0 | 704 |
| 1 | 0,25 | PC / ASA | 0 | 0,1 | 0 | 95 |
| 2 | 0,25 | PC / ASA | 0,1 | 0,1 | 0 | 170 |
| 3 | 0,25 | PC / ASA | 0 | 0,2 | 0 | 59 |
| V2 | 0,25 | PC/PBT³⁾ | 0 | 0 | 0 | 422 |
| 4 | 0,25 | PC/PBT | 0,1 | 0 | 0,1 | 74 |
| 5 | 0,25 | PC/PBT | 0,1 | 0 | 0,05 | 198 |
| 6 | 0,25 | PC/PBT | 0,05 | 0 | 0,1 | 63 |
| 7 | 0,25 | PC/PBT | 0 | 0 | 0,2 | 50 |
| V3 | 0,25 | PP⁴⁾ | 0 | 0 | 0 | 950 |
| 8 | 0,25 | PP | 0,1 | 0 | 0 | 347 |
| 9 | 0,25 | PP | 0,2 | 0 | 0 | 252 |
| 10 | 0,25 | PP | 0,3 | 0 | 0 | 186 |

| | | | | | | |
|---|---|---|---|---|---|---|
| ¹⁾ Polycarbonat | | | | | | |
| ²⁾ Acrylnitril-Styrol-Acrylester-Copolymer | | | | | | |
| ³⁾ Polybutylenterephthalat | | | | | | |
| ⁴⁾ Polypropylen | | | | | | |

## Patentansprüche

1. Verfahren zur Verringerung der Formaldehydemission von mit Polyacetal gemischten Thermoplasten, **dadurch gekennzeichnet, dass** die Thermoplastmischung in Gegenwart mindestens eines Stabilisators in einem Mischaggregat aufgeschmolzen und weiteren Verarbeitungsschritten unterworfen wird.

2. Verfahren nach Anspruch 1, wobei als Stabilisator mindestens ein Salz einer Carbonsäure, mindestens ein stickstoffhaltiger Stabilisator oder eine Mischung daraus verwendet wird.

3. Verfahren nach Anspruch 2, wobei als Salz einer Carbonsäure mindestens ein Salz eines zweiwertigen Metallions eingesetzt wird.

4. Verfahren nach Anspruch 3, wobei als Salz einer Carbonsäure mindestens ein Carborisäuresalz eines Erdalkalimetalls eingesetzt wird.

5. Verfahren nach Anspruch 2, wobei als Salz einer Carbonsäure Calciumstearat, Magnesiumstearat, Calciumcitrat, Tricalciumcitrat oder eine Mischung enthaltend mindestens eine dieser Verbindungen eingesetzt wird.

6. Verfahren nach Anspruch 2, wobei das Salz einer Carbonsäure in einer Menge von 0,0001 bis 5 Gew.% eingesetzt wird.

7. Verfahren nach Anspruch 2, wobei als stickstoffhaltiger Stabilisator eine heterozyklische Verbindung eingesetzt wird, die mindestens ein Stickstoffatom im Ring enthält.

8. Verfahren nach Anspruch 7, wobei der stickstoffhaltiger Stabilisator ein Aminopyridinderivat enthält.

9. Verfahren nach Anspruch 2, wobei der stickstoffhaltige Stabilisator mindestens eine Verbindung aus der Gruppe bestehend aus Melamin, 2,6-Diaminopyridin, substituierte und dimere Aminopyridine, Hydantoin, Allantoin, Melamin-Formaldehyd-kondensate, Methylolmelamin, Polyamid enthält.

10. Verfahren nach Anspruch 2, wobei der stickstoffhaltige Stabilisator in einer Menge von 0,001 bis 5 Gew.% eingesetzt wird.

11. Verwendung von stickstoffhaltigen Verbindungen, Salzen von Carbonsäuren oder deren Mischungen als Stabilisator bei der Schmelzeverarbeitung von Thermoplasten, die von Polyacetal verschieden sind, jedoch Polyacetal enthalten.

12. Thermoplastische Formmasse, die auf einem Kunststoff basiert, der von Polyacetal verschieden ist, die jedoch Polyacetal und mindestens ein Salz einer Carbonsäure oder mindestens einen stickstoffhaltigen Stabilisator enthält.
